# EUROPEAN PATENT APPLICATION

(11) **EP 1 604 787 A1**
(43) Date of publication of application: **14.12.2005**
(21) Application number: 03753240.5
(22) Date of filing: 30.09.2003
(51) Int. Cl.: B25G 3/28, B25D 1/00, F16B 19/00

(54) **AN AXE OR HAMMER BEING FIRMLY ASSEMBLED**

(30) Priority: 18.02.2003 CN 03204104
(71) Applicant: Luo, Shusen, Shandong 273413 (CN)
(72) Inventor: Luo, Shusen, Shandong 273413 (CN)
(74) Representative: Finnie, Peter John
(86) International application number: PCT/CN2003/000842
(87) International publication number: WO 2004/073934

(57) **Abstract**

An axe or hammer includes axe head or hammer head with assembling blind hole and a handle, wherein the bottom part of the assembling blind hole is inverted tapered shape, and the part of the assembling blind hole, which is away from the bottom part of the assembling blind hole and is above the middle part and below the top part of the assembling blind hole, has a tubular shape. In the assembling blind hole there is an inverted wedge whose shape corresponds with the shape of the blind hole, the handle is tubular, whose front part for assembling locates between the blind hole and the inverted taper part of the wedge. In this invention, because the front part locates between the blind hole and the inverted taper part of the wedge, in the course of assembling axe head or hammer head and the handle, due to inverted wedge producing great compressing force, the axe' or hammer's resistance to separating is increase with great extent, its reliability is also enhanced, and the life of validity is prolonged over 2 times than the known axe or hammer.

## Description

### Technical Field

This invention relates to a hand cutting, or beating tool, and more particularly, to a firmly assembled axe or hammer.

### Background Art

A structure of an existing axe or hammer commonly used comprises an axe or hammer head with an assembling hole and a handle assembled together by interference fit with assembling hole of the axe or hammer head, and between the axe or hammer head and the handle there is provided adhesive and on the axe or hammer head there is provided a cross pin in a direction perpendicular to said handle. The axe or hammer having this conventional structure has its assembling firmness and use life mainly dependent on the dimension accuracy of the handle and the assembling hole and on the binding effects of the adhesive. Since this kind of hand tool is a product with low additional value, in the mass production course, it is difficult to assure that both handle of each axe or hammer and the assembling hole of the axe or hammer head have high fitting accuracy, and thereby it is difficult to assure that each axe or hammer has good firmness and reliability; and the binding action of the adhesive is subjected to the affection of weather, environment, temperature, humidity, application conditions, chemical erosion and other factors, and would be aged or failed, to cause the safety and reliability of the product to not be maintained. In addition, under the normal application conditions, since the tool is subjected to comprehensive action of the outside forces, such as impulse, bending, separating force and the like, one possibility is that, after the handle and the axe or hammer head are assembled, stress concentration is caused at the surface near the axe or hammer body and the handle is liable to be broken at this position; and the other possibility is that the handle is caused to have plastic deformation so that the combining force of the handle with the axe or hammer head is reduced to cause head falling phenomena. These two cases not only make the resistance to separating low and the life short, but also are liable to cause economic loss or even cause injure accidents.

### Summary of the Invention

An object of the present invention is to overcome the defects of the existing art described above, and to provide an axe or hammer having high resistance to separating, high reliability and long use life, and being firmly assembled.

The firmly assembled axe or hammer of the invention comprises an axe or hammer head with an assembling blind hole and a handle, wherein the bottom part of the assembling blind hole of said axe or hammer head has an inverted taper shape, and the part of the assembling blind hole, which is away from the bottom part of the assembling blind hole and is above the middle part and is below the top part of the assembling blind hole, has a tubular shape; and in said assembling blind hole there is provided an inverted wedge whose shape corresponds to that of the assembling blind hole, said handle having a hollow tubular shape, the front part of the assembling end of said handle is located between said assembling blind hole and the inverted taper part of the inverted wedge.

Preferably, a plurality of claws are uniformly provided on a side wall of the front part of the assembling end of said handle in the direction of the longitudinal axis of the handle.

Preferably, the number of said claws is four.

Preferably, the maximum outside diameter of the taper part of said inverted wedge is greater than the inside diameter of said tubular handle and less than the outside diameter of said tubular handle.

Preferably, there is provided adhesive between the wall of said handle and said axe or hammer head and between the inside wall of the handle and said inverted wedge.

Preferably, the front end part of said inverted wedge extends out of the axe or hammer head by 10~50 mm.

Preferably, the front end part of said inverted wedge extends out of the axe or hammer head by 20 mm.

Preferably, said inverted wedge has a section of cylindrical body at its end part near the bottom part of the assembling blind hole of the axe or hammer head.

Preferably, the bottom part of the assembling blind hole of said axe or hammer head has an inverted cone shape, and the part of the assembling blind hole, which is away from the bottom part of the assembling blind hole and is above the middle part and is below the top part of the assembling blind hole, has a tubular has a circular tubular shape; and said handle has a hollow circular tubular shape.

Preferably, there is provided a stop ring on the handle at a position near the axe or hammer head and the outside of the handle is covered with a rubber sheath.

The firmly assembled axe or hammer of the invention has following advantages and active effects: the axe or hammer comprises an axe or hammer head with an assembling blind hole and a handle assembled together with the assembling blind hole by interference fit; the bottom part of the assembling blind hole of the axe or hammer head has an inverted taper shape; in the assembling blind hole there is provided an inverted wedge whose shape corresponds to that of the assembling blind hole; in the course of assembling the axe or hammer head with the handle, a great compressing force is produced under the action of the inverted wedge, so that the axe' or hammer's resistance to separating is increased with great extent, its reliability is also enhanced, and the life of validity is prolonged over 3 times than the known axe or hammer.

Hereinafter, the invention will be further described in detail in conjunction with drawings.

### Brief Description of the Drawings

Fig. 1 is a schematic structure sectional view of a first embodiment of a firmly assembled axe or hammer of the invention;
Fig. 2 a sectional view taken along A-A in Fig. 1;
Fig. 3 a sectional view taken along B-B in Fig. 1; and
Fig. 4 is a schematic structure sectional view of a second embodiment of a firmly assembled axe or hammer of the invention.

### Detailed Description of the Preferred Embodiment

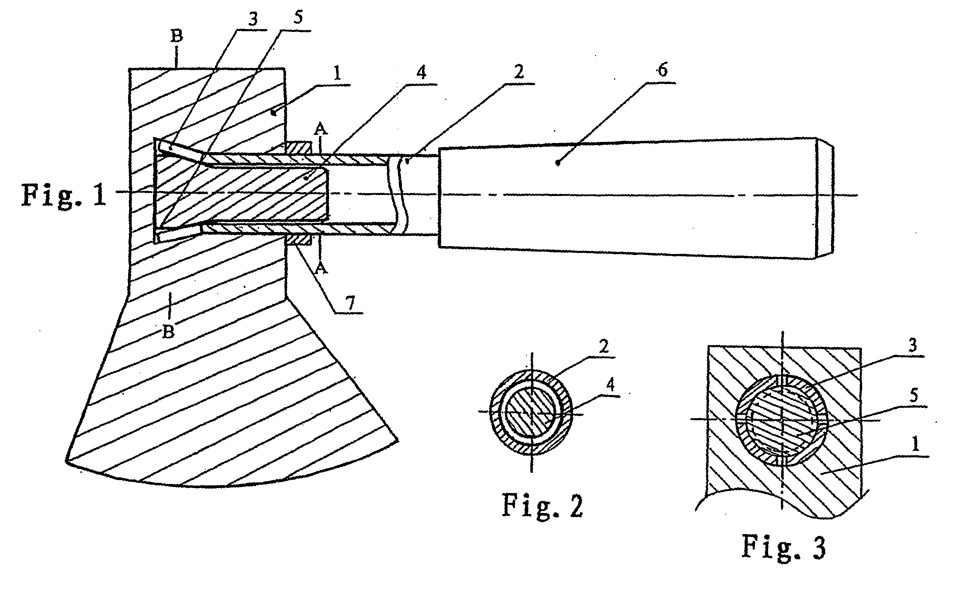

See Fig. 1 to Fig. 3. Fig. 1 is a schematic structure sectional view of a first embodiment, i.e. a hatchet, of a firmly assembled axe or hammer of the invention, the hatchet comprising an axe head 1 with an assembling blind hole and a handle 2 assembled together with the assembling blind hole by interference fit. Wherein the handle 2 has a hollow circular tubular shape, on a side wall of an assembling end of the handle there are uniformly provided four claws 3 in the direction of the longitudinal axis of the handle. The number of the claws can be set as three, six, eight, etc. according to the diameter of handle and the type of the axe or hammer. The bottom part of the assembling blind hole of the axe head 1 has an inverted taper shape. The part of the assembling blind hole, which is away from the bottom part of the assembling blind hole and is above the middle part and below the top part of the assembling blind hole, has a tubular shape. In the assembling blind hole there is provided an inverted wedge 4 whose shape corresponds to that of the assembling blind hole, that is, the inverted wedge 4 comprises a taper part, a bottom cylindrical part 5 and a front cylindrical part, whose the maximum outside diameter of the taper part and the outside diameter of the bottom cylindrical part 5 are greater than the inside diameter of the tubular handle 2 and are 0.5 mm less than the outside diameter of the tubular handle 2; and the minimum outside diameter of the taper part and the outside diameter of the front cylindrical part are less than the inside diameter of the tubular handle 2 by 0.1~0.4 mm. In the case that the material of the handle 2 has better plasticity, the assembling end of the tubular handle is plastically deformed by the action of pressure of the inverted wedge 4 under an assembling impulse force, and thus, the assembling end of the handle 2 may not have claws and is of an integral circular tubular shape. The claws 3 are clamped between the assembling blind hole and the inverted taper part of the inverted wedge 4. Thus, when the handle 2 is assembled to the axe head 1, the assembling impulse force makes the outside taper surface of the inverted wedge 4 produce a great extrusion force on the tubular wall of the handle 2 so as to cause plastic deformation of the tubular wall of the handle, and the axe head 1 and the handle 2 are assembled together very firmly under the action of the inverted wedge 4; and thus it is difficult for the handle 2 to separate from the axe head 1, thereby increasing the resistance to separating and enhancing the safety and reliability of use. Between the outside wall of the handle 2 and the axe head 1 and between the inside wall of the handle 2 and the inverted wedge 4 adhesive is filled to further improve the assembling strength of the axe or hammer of the invention. The front end part of the inverted wedge 4 extends out of the axe or hammer head by 20 mm, so as to increase the test strength under stationary load of the invention, at same time avoid stress concentration from producing on the handle 2 near the surface of the axe or hammer body due to the assembly of the axe or hammer head, and effectively prevent the handle from breaking when using the axe or hammer to pry forcefully. It is also feasible that the front end part of the inverted wedge 4 extends out of the axe head by 10~50 mm, and the concrete size can be determined according to the size and the type of the axe or hammer. The inverted wedge 4 has a section of cylindrical body 5 integral with the inverted wedge 4, at its end part near the bottom part of the assembling blind hole of the axe or hammer head, the action of which cylindrical body 5 is to facilitate the assembling and to assure the fitting length of the taper surface of the inverted wedge with the assembling end of the handle 2. There is provided a stop ring 7 on the handle 2 at a position near the axe head 1. In order to make the use comfortable and to have an esthetic appearance, the outside of the handle 2 is covered with a rubber sheath 6. The handle 2 of the axe or hammer may also have a hollow square tubular shape; and correspondingly, the bottom part of the assembling blind hole of the axe head 1 has an inverted taper shape and the part of the assembling blind hole, which is away from the bottom part of the assembling blind hole and is above the middle part and is below the top part of the assembling blind hole, has a square tubular shape. Of course, the handle 2 may also be a hollow tube having an ellipse section or other sections.

When being assembled, first the inverted wedge 4 is put into the assembling hole; then the assembling end of the tubular handle 2 is inserted between the inverted wedge 4 and the axe head 1; and finally the handle 2 is pounded down forcefully to make the axe head 1 and the handle 2 be firmly assembled together.

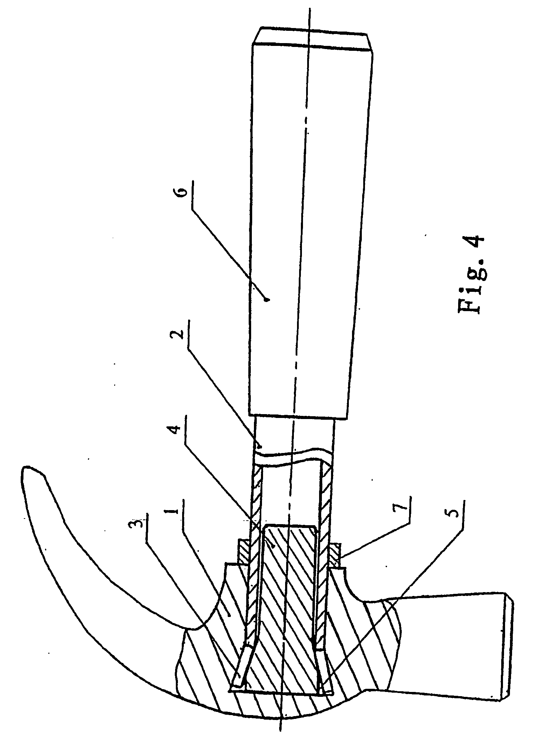

See Fig.4. is a schematic structure sectional view of a second embodiment i.e. a claw hammer, of a firmly assembled axe or hammer of the invention, wherein the assembling structure of the handle and the claw hammer head is identical to that of the hatchet and its handle and is not described in detail.

The firmly assembled axe or hammer of the invention, since there is no a cross pin hole on the outside surface of the axe or hammer head, is not only esthetic, but also avoids the impurity entering because of having the cross pin hole, prevents the inside wall of the steel tube handle from rusting, and facilitate to prolong the use life. Its assembly is firm; has a great drawing and bending strength; make the use safe and reliable, the production sequence simple, and the work amount less; has advanced manufacture process; can be automatically operated to improve production efficiency; and the axe or hammer is a hand tool having stable quality and high reliability. In addition, the inverted wedge connection and assembly manner of the handle with the axe or hammer head of the invention is not limited to an axe or hammer, and is applicable to other hand tools of the beating kind, such as pick and the like, or the cutting kind.

## Claims

1. an axe or hammer firmly assembled, comprising an axe or hammer head (1) with an assembling blind hole and a handle (2), wherein the bottom part of the assembling blind hole of said axe or hammer head (1) has an inverted taper shape, and the part of the assembling blind hole, which is away from the bottom part of the assembling blind hole and is above the middle part and below the top part of the assembling blind hole, has a tubular shape; and in said assembling blind hole there is provided an inverted wedge (4) whose shape corresponds to that of the assembling blind hole, said handle having a hollow tubular shape, the front part of the assembling end of said handle is located between said assembling blind hole and the inverted taper part of the inverted wedge (4).

2. The firmly assembled axe or hammer according to claim 1, wherein a plurality of claws (3) are uniformly provided on a side wall of the front part of the assembling end of said handle (2) in the direction of the longitudinal axis of the handle.

3. The firmly assembled axe or hammer according to claim 2, wherein the number of said claws is four.

4. The firmly assembled axe or hammer according to claim 1, 2 or 3, wherein the maximum outside diameter of the taper part of said inverted wedge (4) is greater than the inside diameter of said tubular handle (2) and less than the outside diameter of said tubular handle (2).

5. The firmly assembled axe or hammer according to claim 4, wherein there is provided adhesive between the outside wall of said handle (2) and said axe or hammer head (1) and between the inside wall of the handle (2) and said inverted wedge (4).

6. The firmly assembled axe or hammer according to claim 5, wherein the front end part of said inverted wedge (4) extends out of the axe or hammer head (1) by 10~50 mm.

7. The firmly assembled axe or hammer according to claim 6, wherein the front end part of said inverted wedge (4)extends out of the axe or hammer head (1) by 20 mm.

8. The firmly assembled axe or hammer according to claim 1, 2, 3, 6 or 7, wherein said inverted wedge (4) has a section of cylindrical body (5) at its end part near the bottom part of the assembling blind hole of the axe or hammer head.

9. The firmly assembled axe or hammer according to claim 8, wherein the bottom part of the assembling blind hole of said axe or hammer head (1) has an inverted cone shape, and the part of the assembling blind hole, which is away from the bottom part of the assembling blind hole and is above the middle part and is below the top part of the assembling blind hole, has a circular tubular shape; and said handle (2) has a hollow circular tubular shape.

10. The firmly assembled axe or hammer according to claim 9, wherein there is provided a stop ring (7) on the handle (2) at a position near the axe or hammer head (1) and the outside of the handle (2) is covered with a rubber sheath (6).
